# EUROPEAN PATENT SPECIFICATION

(11) **EP 1 724 053 B1**
(45) Date of publication and mention of the grant of the patent: **19.03.2008**
(21) Application number: 06111909.5
(22) Date of filing: 29.03.2006
(51) Int. Cl.: B23K 37/04

(54) **Method and apparatus for fabricating casings intended to accommodate electric equipment**
Verfahren und Vorrichtung zur Herstellung eines Gehäuses für elektrische Geräte
Méthode et dispositif pour la production d'un boîtier pour des appareils électriques

(30) Priority: 16.05.2005 IT PN20050030
(43) Date of publication of application: 22.11.2006
(73) Proprietor: Hager-Lumetal S.p.A., 33080 Porcia, Pordenone (IT)
(72) Inventor: Dal Santo, Roberto, 33080 Roveredo in Piano (Pordenone) (IT); Nadalin Zanon, Giorgio, 33084 Cordenons (Pordenone) (IT)
(74) Representative: Giugni, Valter

(56) References cited:
- GB-A- 2 364 665

## Description

The present invention refers to an improved method for manufacturing metal casings intended to accommodate electric equipment, as well as an apparatus for carrying out such method.

Casings of the above-cited kind are substantially formed of a sheet-metal band that is bent into a box-like shape, and is then welded on to at least a couple of transverse section bars aimed at imparting rigidity to the whole structure.

Up to now, these casings have generally been welded in installations featuring various degrees and extents of automation, which make use of appropriate, special welding jigs allowing differently sized casings to be manufactured there, according to the demand and the final use requirements of the same casings. On these installations, welding is done by means of robot-assisted fixtures that are programmable to properly track the contours of the members and parts to be welded.

The welding jigs used in a first kind of such installations are adjustable along the three Cartesian axes in space so as to adapt to the various sizes of the casings, thereby enabling a complete and continuous operation to be performed. A solution like this, however, turns clearly out as being quite a complex one from both a construction and operation point of view; furthermore, it has a physical limitation due to its involving the use of robotized fixtures that certainly have a considerable bulk and size as compared to the relatively small-sized casings being handled there.

In another kind of currently used installations, use is made of welding jigs that enable individual operations to be performed along one or two corners of the box-shaped structure. In this case, problems tend to arise as far as the ability of the dimensional stability, i.e. constancy and the orthogonality of the welds to be maintained is concerned, owing to the need for more than a single welding jig to be successively associated to the casing that has to be manufactured. Clearly enough, this also involves considerably longer manufacturing times.

It is therefore a purpose of the present invention to provide an improved fabrication method for manufacturing metal casings intended to accommodate electrical equipment, which, while making use of a reduced number of welding jigs, enables casings to be manufactured in a single installation, wherein the possibility is given for such installation to continuously adapt to the varying dimensions of such casings along all three Cartesian axes in space.

Another purpose of the present invention is to provide a fabrication method of the above-cited kind, in which the need for the welding to be dimensionally adjusted along at least one of the Cartesian axes in space is done away with.

Yet another purpose of the present invention is to provide a fabrication method of the above-cited kind, in which the welding operations to be performed on differently sized casings are independent of the depth of the same casings.

A further purpose of the present invention is to provide a fabrication method, in which the casings to be welded are handled using simple, traditional handling means, such as sliding belts, or roller tables, and scissors tables, without any need for programmable controls of a complex and expensive kind to be provided.

According to the present invention, these and further aims are reached in a fabrication method incorporating the characteristics as recited in claims 1 et seq. appended hereto.

Anyway, features and advantages of the method and apparatus according to the present invention may be more readily understood from the description that is given below by way of non-limiting example with reference to the accompanying drawings, in which:
- Figure 1 is a schematical view of an apparatus for fabricating casings according to the present invention;
- Figures 2A, 2B and 2C are schematical views illustrating the operating sequence taking place in a station of the apparatus illustrated in Figure 1;
- Figures 3A, 3B and 3C are schematical views illustrating the operating sequence taking place in another station of the apparatus illustrated in Figure 1.

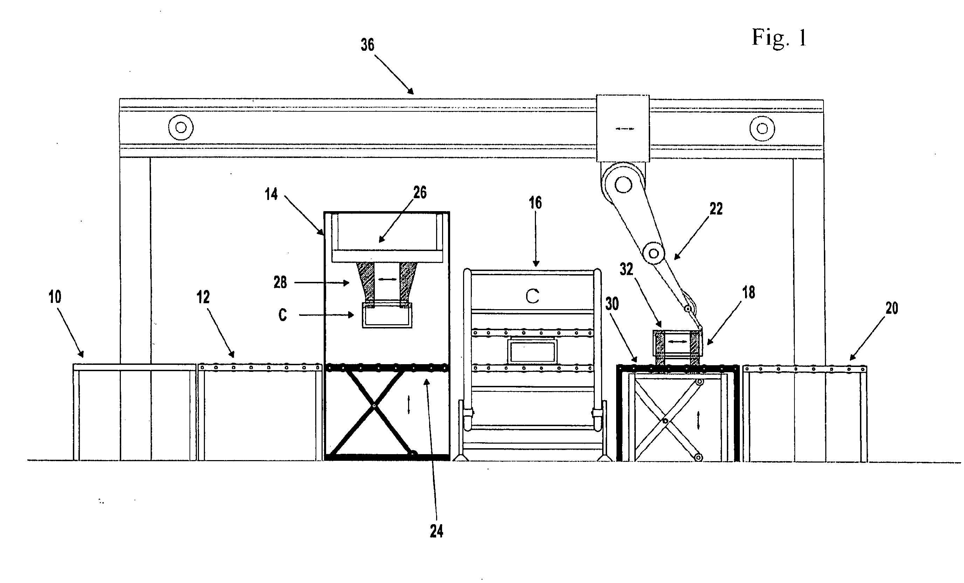

The method according to the present invention is implemented in an apparatus as this is illustrated schematically in Figure 1 in a typical configuration thereof.

Manufacturing a metal casing intended to accommodate electrical equipment is done by usually starting from a sheet-metal band that is bent into a box-like shape, , and is then welded on to at least a couple of transverse section bars aimed at imparting rigidity to the whole structure.

The apparatus according to the present invention is essentially comprised of a stationary bed 10, a first roller table 12, a first welding station 14, an overturning fixture 16, a second welding station 18, a second roller table 20, and a welding tool 22, wherein it can be readily appreciated that the roller tables may be replaced by sliding belts or similar conveyance means.

The bed 10 has a resting surface, on which the various parts (rear wall, side walls and transverse section bars) making up the casing C to be manufactured are assembled manually, wherein these component parts are normally provided with bores drilled to various shapes and sizes. The pre-assembled casing is then placed upon the first roller table 12, with the open side thereof facing upwards, and is conveyed onto the first welding station 14. This welding station 14 comprises a resting and sliding surface 24, which is preferably supported by a scissors table, or the like, and a welding jig 26.

The welding jig 26 is provided with expansible members 28, which are introduced in the upward facing opening of the casing C to cause them to engage the edges thereof, so as to keep the casing suspended and attached to the welding jig as welding is carried out along the front corners of the same casing.

The overturning fixture 16, onto which the casing C is then transferred, is provided with two roller tables, or the like, between which the casing is clamped and kept as it is tuned over by 180° so as to be able to be then conveyed onto the second welding station 18 in a correct position thereof.

The welding station 18 comprises in turn a resting and sliding surface 30, which is again supported preferably by a scissors table, or the like, and a welding jig 32. Similarly to the above-cited welding jig 26, even this welding jig 32 is provided with expansible members 34 that are adapted to be introduced in the now downward facing opening of the casing C to cause them to engage the edges thereof, so as to keep the casing in a fixed position as welding is carried out along the rear corners of the same casing.

Finally, the casing C is discharged from the installation via the second roller table 20.

Preferably, the welding tool 22 is an anthropomorphous robot mounted on an overhead rail 36, and controlled and driven so as to be able to displace between the two welding stations 14 and 18. Alternatively, use can be made of a stationary robot at each welding station, in accordance with and depending on the particular characteristics of the casings to be manufactured and the economic sustainability of the installation.

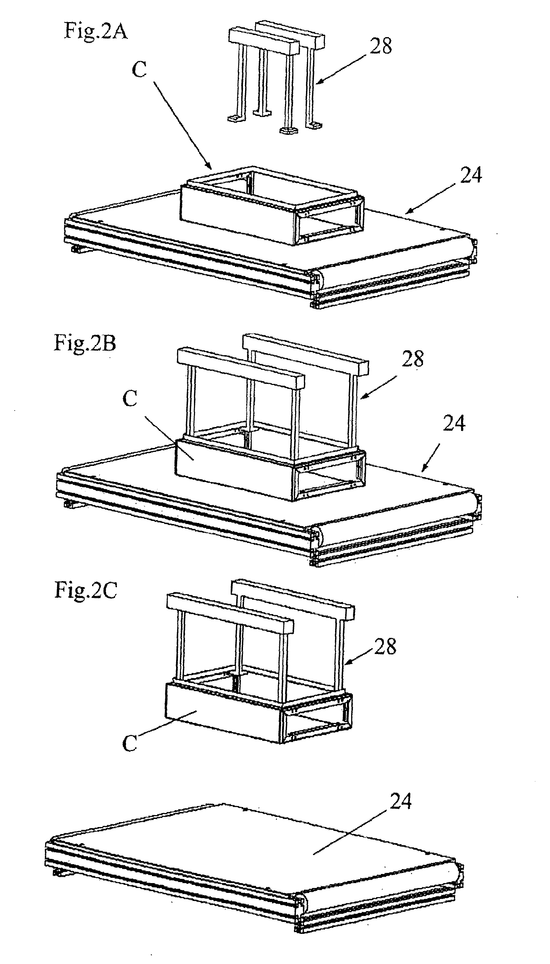

Figures 2A to 2C schematically illustrate the sequence of the welding operation that takes place, i.e. is carried out at the first welding station 14. The scissors table 24 raises the pre-assembled casing C up to a position in which the expansible members 28 of the welding jig are able to come into the upward facing opening of the same casing, thereby engaging the edges thereof from inside. Then, the scissors table 24 is lowered, thereby leaving the casing firmly suspended to the welding jig so as to enable welding to be carried out along the front corners by means of the welding tool 22. Once welding is completed, the scissors table 24 is raised again, so as to catch and accommodate the casing being released from the expansible members 28 of the welding jig, and is then lowered again to enable the casing to be transferred onto the overturning fixture 16.

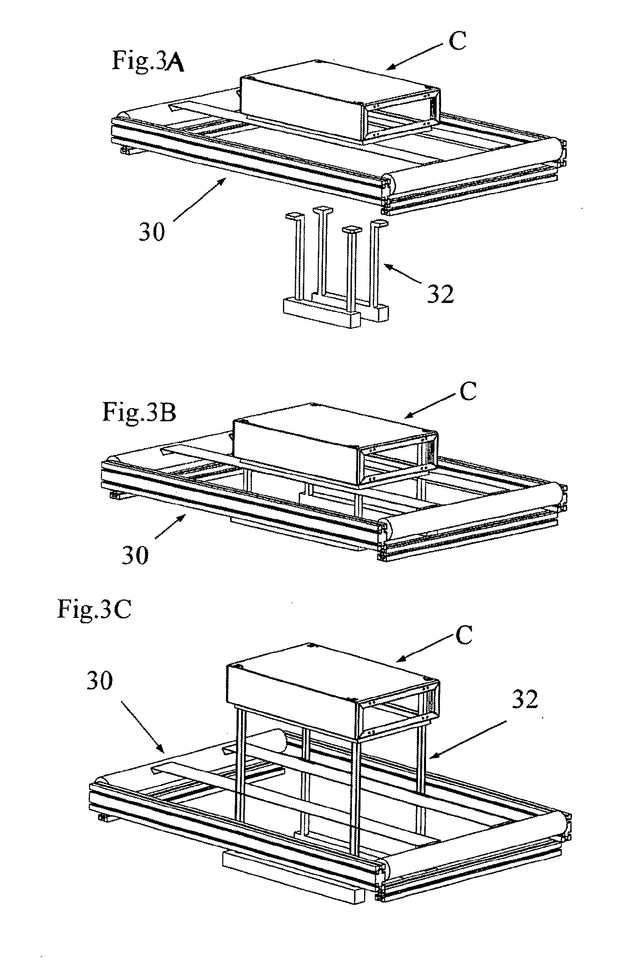

Similarly, Figures 3A to 3C schematically illustrate the sequence of the welding operation that takes place, i.e. is carried out at the second welding station 18. After the casing C has been conveyed onto the resting surface 30 with the opening thereof facing downwards, the expansible members 32 are introduced in the downward facing opening of the casing and caused to expand so as to engage the edges of the same casing. This movement can be brought about by either causing the welding jig to rise relative to the resting surface 30 or lowering said resting table relative to the welding jig. Furthermore, this movement is performed through a fixed stroke, suitably selected so as to ensure that containers of any size are capable of remaining firmly suspended on to the expansible members of the welding jig. As soon as welding is completed, the expansible members 32 are released from the edges of the casing, which is therefore allowed to rest again on the resting and sliding surface 30 to be then transferred on to the unloading table 20.

At this point, it can most readily be appreciated that the main advantage of the method according to the present invention derives from the fact that the welding apparatus can be fully automated, thereby doing away with the need for the welding procedure to be each time adjusted dimensionally at least along one of the Cartesian axes. In fact, setting the height and width dimensions of the casings to be manufactured is all that the welding programme requires, actually, since the depth dimension is adjusted without any need for a particular set-up to be provided. A simple photoelectric cell or micro-switch arrangement is in fact more than sufficient for the level of the edge from the bottom of the casing to be detected.

As a result, the number of jigs required to weld differently sized casings is drastically reduced.

## Claims

1. Method for the fabrication of casings intended to accommodate electric equipment, comprising a step in which a sheet-metal band is bent into a box-like shape, a step for assembling the thus obtained box-shaped structure with at least two transverse section bars intended to impart rigidity to the composite structure of the casing, a step for transferring the composite structure of the casing to the welding tool, at least a welding step, and a casing unloading step, **characterized in that** a first welding step is carried out with the composite structure of the casing (C) suspended to a first welding jig (26), whereas a second welding step is carried out with the composite structure of the casing (C) supported by a second welding jig (32) in an overturned position as compared with the previous one.

2. Method according to claim 1, **characterized in that** between the first welding step and the second one there is provided a step in which the composite structure of the casing is turned over.

3. Method according to claim 1 or 2, **characterized in that** each welding step is carried out with the use of a robotized welding tool (22) of its own.

4. Method according to claim 1 or 2, **characterized in that** both the first welding step and the second one are carried out with the use of a single and same robotized welding tool (22) that is adapted to displace between the two welding stations (14, 18) in synchrony with the transfer steps of the composite structure of the casing.

5. Apparatus for performing the method according to any of the preceding claims, comprising at least an assembly station, a welding station and an unloading station, **characterized in that** it is provided with a first welding station (14), in which the casing (C) to be welded is kept suspended to a first expansible welding jig (26), an overturning fixture (16) for the casing (C), and a second welding station (18), in which the casing (C) to be welded is kept resting onto a second expansible welding jig (32) in an overturned position as compared with the previous one.

6. Apparatus according to claim 5, **characterized in that** each welding station (14, 18) is provided with a roller table (24, 30), or the like, adapted to be displaced vertically by means of a scissors table or the like.

## Patentansprüche

1. Verfahren zur Fertigung von Gehäusen, die vorgesehen sind, um elektrische Anlagen aufzunehmen, umfassend einen Schritt, in dem ein Blechband in eine kastenartige Form gebogen wird, einen Schritt zum Zusammensetzen der so erhaltenen kastenförmigen Struktur mit wenigstens zwei querlaufende Profilstreifen, die vorgesehen sind, um der Verbundstruktur des Gehäuses Steifigkeit zu verleihen, einen Schritt des Transportierens der Verbundstruktur des Gehäuses zu dem Schweißwerkzeug, wenigstens einen Schweißschritt und einen Gehäuseabladungsschritt, **dadurch gekennzeichnet, dass** ein erster Schweißschritt mit der Verbundstruktur des Gehäuses (C) aufgehängt an einer ersten Schweißlehre (26) ausgeführt wird, wohingegen ein zweiter Schweißschritt mit der Verbundstruktur des Gehäuses (C) durch eine zweite Schweißlehre (32) in einer im Vergleich zu der vorhergehenden Position gewendeten Position getragen durchgeführt wird.

2. Verfahren nach Anspruch 1, **dadurch gekennzeichnet, dass** zwischen dem ersten Schweißschritt und dem zweiten Schweißschritt ein Schritt bereitgestellt ist, in dem die Verbundstruktur des Gehäuses gewendet wird.

3. Verfahren nach Anspruch 1 oder 2, **dadurch gekennzeichnet, dass** jeder Schweißschritt mit Hilfe seines eigenen computergesteuerten Schweißwerkzeugs (22) durchgeführt wird.

4. Verfahren nach Anspruch 1 oder 2, **dadurch gekennzeichnet, dass** sowohl der erste Schweißschritt als auch der zweite Schweißschritt mit Hilfe ein und desselben computergesteuerten Schweißwerkzeugs (22) durchgeführt werden, das eingerichtet ist, um sich zwischen den zwei Schweißstationen (14, 18) synchron mit den Transportschritten der Verbundstruktur des Gehäuses zu verlagern.

5. Vorrichtung zum Durchführen des Verfahrens nach einem der vorhergehenden Ansprüche, umfassend wenigstens eine Montagestation, wenigstens eine Schweißstation und eine Abladestation, **dadurch gekennzeichnet, dass** sie mit einer ersten Schweißstation (14), an der das zu schweißende Gehäuse (C) an einer ersten erweiterbaren Schweißlehre (26) aufgehängt gehalten wird, einer Wendeaufnahmevorrichtung (16) für das Gehäuse und einer zweiten Schweißstation (18), an der das zu schweißende Gehäuse (C) aufliegend auf einer zweiten erweiterbaren Schweißlehre (32) in einer im Vergleich zu der vorhergehenden Position gewendeten Position gehalten wird, versehen ist.

6. Vorrichtung nach Anspruch 5, **dadurch gekennzeichnet, dass** jede Schweißstation (14, 18) mit einem Rollentisch (24, 30) oder dergleichen versehen ist, der eingerichtet ist, um mittels eines Scherentisches oder dergleichen vertikal verschoben zu werden.

## Revendications

1. Procédé pour la fabrication de boîtiers prévus pour loger du matériel électrique, comprenant une étape dans laquelle une bande de tôle est courbée en une forme de type boîte, une étape d'assemblage de la structure en forme de boîte ainsi obtenue avec au moins deux profilés transversaux prévus pour apporter de la rigidité à la structure composite du boîtier, une étape de transfert de la structure composite du boîtier vers l'outil de soudage, au moins une étape de soudage, et une étape de déchargement du boîtier, **caractérisé en ce qu'**une première étape de soudage est réalisée avec la structure composite du boîtier (C) suspendue à un premier gabarit de soudage (26), alors qu'une deuxième étape de soudage est réalisée avec la structure composite du boîtier (C) supportée par un deuxième gabarit de soudage (32) dans une position retournée par rapport à la précédente.

2. Procédé selon la revendication 1, **caractérisé en ce qu'**entre la première et la deuxième étape de soudage, une étape est prévue dans laquelle la structure composite du boîtier est retournée.

3. Procédé selon la revendication 1 ou 2, **caractérisé en ce que** chaque étape de soudage est réalisée en utilisant un outil de soudage robotisé (22) qui lui est propre.

4. Procédé selon la revendication 1 ou 2, **caractérisé en ce qu'** à la fois la première et la deuxième étape de soudage sont réalisées en utilisant un seul et même outil de soudage robotisé (22) qui est adapté pour se déplacer entre les deux stations de soudage (14, 18) de manière synchronisée avec les étapes de transfert de la structure composite du boîtier.

5. Appareil pour réaliser le procédé selon l'une quelconque des revendications précédentes, comprenant au moins une station d'assemblage, une station de soudage et une station de déchargement, **caractérisé en ce qu'**une première station de soudage (14) est fournie, dans laquelle le boîtier (C) à souder est maintenu suspendu à un premier gabarit de soudage extensible (26), un dispositif de retournement (16) pour le boîtier (C) et une deuxième station de soudage (18), dans laquelle le boîtier (C) à souder est maintenu en position sur un deuxième gabarit de soudage extensible (32) dans une position retournée par rapport à la précédente.

6. Appareil selon la revendication 5, **caractérisé en ce que** chaque station de soudage (14,18) est équipée d'une table à rouleaux (24, 30), ou analogue, adaptée pour être déplacée verticalement au moyen d'une table à ciseaux ou analogue.
